Europäisches Patentamt

(19) European Patent Office

Office européen des brevets

(11) Numéro de publication: **0 018 292**
**B1**

(12) **FASCICULE DE BREVET EUROPEEN**

(45) Date de publication du fascicule du brevet:
07.07.82

(21) Numéro de dépôt: 80400531.2

(22) Date de dépôt: 18.04.80

(51) Int. Cl.³: **F 16 D 57/06,** F 16 D 63/00

(54) **Frein rotatif électrohydraulique.**

(30) Priorité: 20.04.79 FR 7909998

(43) Date de publication de la demande:
**29.10.80 Bulletin 80/22**

(45) Mention de la délivrance du brevet:
**07.07.82 Bulletin 82/27**

(84) Etats contractants désignés:
**AT BE CH DE FR GB IT LI LU NL SE**

(56) Documents cités:
**Cited documents (56):**
**CH-A-492 585**
**DE-A-1 964 564**
**DE-A-2 136 158**
**FR-A-1 317 809**
**FR-A-2 268 990**
**FR-A-2 278 991**
**US-A-1 850 693**

(73) Titulaire: **COMPAGNIE DE CONSTRUCTION
MECANIQUE SULZER Société anonyme dite:,
51, boulevard Brune, Cedex 59 F-75300 Paris Brune (FR)**

(72) Inventeur: **Charlat, Patrice, 10, rue de l'Odon,
F-78200 Mantes la Ville (FR)**
Inventeur: **Delmas, Bernard, 57, boulevard du Général
Leclerc, F-92110 Clichy (FR)**
Inventeur: **Mallen-Herrero, José, 29, boulevard des
Batignolles, F-75008 Paris (FR)**

(74) Mandataire: **Rinuy, Guy et al, 14, Avenue de la Grande
Armée, F-75017 Paris (FR)**

# Frein rotatif électrohydraulique

La présente invention concerne les freins rotatifs électrohydrauliques comprenant un noyau intérieur, au moins un enroulement d'excitation, une fourrure amagnétique cylindrique, une pièce annulaire extérieure au noyau et à la fourrure et comportant un alésage cylindrique excentré par rapport à la surface périphérique cylindrique de la fourrure, des évidements munis de palettes coulissantes magnétisables et un fluide de freinage.

Dans ce type de freins constitués en quelque sorte par une pompe volumétrique à palettes, entièrement ou partiellement rempli par un fluide de préférence incompressible, les palettes, solidaires de l'organe rotatif, sont susceptibles d'être actionnées radialement en étant guidées dans leurs évidements respectifs. Ainsi, au moment où le freinage doit avoir lieu, une variation de courant dans l'enroulement d'excitation agit successivement pendant une rotation sur toutes les palettes pour les amener à cloisonner l'alésage cylindrique de la pièce annulaire excentré par rapport à la fourrure; de la sorte, les palettes déterminent des chambres périphériques de volumes différents; le passage forcé du fluide, provoquant un laminage intense entre les palettes et l'organe fixe de la pompe, est à l'origine du couple de freinage que l'appareil peut développer.

Suivant une réalisation connue (FR-A-2 268 990), le noyau intérieur, immobile en rotation et axialement, est en matériau magnétique et comporte une cavité périphérique circulaire dans laquelle est logé l'enroulement torique d'excitation, l'ensemble étant enveloppé par la fourrure amagnétique cylindrique et constituant l'organe fixe ou stator; la pièce annulaire extérieure constitue l'organe rotatif, ou rotor, solidaire de la masse à freiner, et c'est elle qui comporte les évidements munis de palettes coulissantes magnétisables. Lorsqu'aucune action de freinage n'est souhaitée, aucun courant n'est envisagé dans l'enroulement d'excitation, et les palettes sont maintenues dans le rotor annulaire, loin du stator, sous l'effet de la force centrifuge. Lorsqu'un freinage est souhaité, le courant est établi dans l'enroulement d'excitation, et les palettes sont ainsi attirées vers le stator ce qui provoque le cloisonnement de l'alésage cylindrique cité plus haute et par conséquent le freinage, à condition que l'intensité du courant électrique soit suffisante pour vaincre les différentes forces s'opposant à un mouvement dans ce sens des palettes; la valeur plus ou moins grande du laminage est déterminée par la force d'application des palettes sur le stator, dépendant du courant d'excitation passant dans l'inducteur électromagnétique.

Cependant, il existe des cas où se présentent des difficultés d'ordre technologique lorsque l'on désire réaliser la pièce externe du frein sous form de rotor cylindrique amagnétique disposé annulairement et solidaire de la masse à freiner; il existe également des cas où il est souhaitable que le freinage s'effectue par suppression du courant d'excitation et non par établissement du courant (par mesure de sécurité par exemple).

A cet effet, la présente invention concerne un frein rotatif électrohydraulique comprenant un noyau intérieur, au moins un enroulement d'excitation, une fourrure amagnétique cylindrique, une pièce annulaire extérieure au noyau et à la fourrure et comportant un alésage cylindrique excentré par rapport à la surface périphérique cylindrique de la fourrure, des évidements munis de palettes coulissantes magnétisables et un fluide de freinage, frein rotatif électrohydraulique caractérisé en ce que le noyau intérieur est solidarisé à un arbre tournant et à la fourrure disposés tous les trois afin de constituer un rotor pour le frein, la pièce annulaire extérieure au noyau et à la fourrure constituant un stator annulaire à alésage excentré par rapport à la surface périphérique de la fourrure constituant la pièce extérieure du rotor et à flasques latéraux montés de façon étanche sur l'arbre, de part et d'autre dudit rotor, et en ce que les évidements munis de palettes sont réalisés dans la fourrure amagnétique cylindrique et s'y étendent radialement de part en part afin que les palettes coulissantes soient mobiles entre une position de totale liberté du rotor par rapport au stator annulaire dans laquelle elles sont positonnées à proximité du noyau rotorique et une position de freinage dans laquelle elles sont positionnées à proximité du stator annulaire, de telle sorte que, sous l'action d'une variation dans un sens prédéterminé du courant parcourant l'enroulement d'excitation, les palettes puissent être attirées vers le stator et déterminer ainsi des chambres périphériques de volumes différents. Le passage forcé des volumes respectifs de fluide d'une chambre à l'autre, provoque entre les palettes et le stator un laminage intense et on réalise ainsi le couple de freinage du rotor. Cette structure permet ainsi de solidariser le rotor à la masse à freiner.

Dans une forme de réalisation particulière de l'invention, la pièce annulaire extérieure constituant le stator est au moins partiellement en matériau amagnétique et comporte des cavités s'étendant en direction de l'axe longitudinal du rotor, lesdites cavités étant munies d'aimants permanents dans la région de l'alésage cylindrique; le plus, le noyau, au moins partiellement en matériau amagnétique, comporte une cavité périphérique circulaire dans laquelle est logé un enroulement torique d'excitation; alors, l'enroulement d'excitation est relié à une alimentation électrique par un moyen de liaison électrique tel qu'un collecteur tournant, de telle sorte qu'il puisse être alimenté électriquement afin de permettre la rotation du rotor et que la diminution du courant qui parcourt ledit enroulement entraîne, à partir d'une certaine valeur, le déplacement des palettes vers les aimants permanents, afin de provoquer le freinage; il en résulte qu'une suppression totale du

0 018 292

courant d'excitation entraîne un freinage extrêmement efficace.

D'autres caractéristiques et avantages de l'invention ressortiront de la description qui va suivre faite en regard des dessins annexés, sur lesquels:

la figure 1 est une section transversale d'une première forme de réalisation d'un frein selon l'invention, selon la ligne I–I de la figure 2;

la figure 2 est une demi-section longitudinale du frein représenté sur la figure 1;

la figure 3 est une section transversale d'une deuxième forme de réalisation d'un frein selon l'invention, selon la figure III–III de la figure 4;

la figure 4 est une demi-section longitudinale du frein représenté sur la figure 3;

la figure 5 est une section transversale d'une troisième forme de réalisation d'un frein selon l'invention, selon la ligne V–V de la figure 6;

la figure 6 est une demi-section longitudinale du frein représenté sur la figure 5.

Dans les trois formes de réalisation, à une arbre d, d'axe longitudinal x, mobile en rotation parce que solidaire d'une masse à freiner elle-même mobile en rotation, est solidarisé concentriquement un noyau D par exemple claveté sur lui.

Ce noyau D peut être réalisé de différentes manières suivant les impératifs tenant aux fonctions à assurer par le frein, comme il sera vu plus loin dans la description spécifique à chacune des formes de réalisation données à titre d'exemple. Dans les trois cas, le noyau intérieur D est entouré d'une fourrure L au moins partiellement en matériau amagnétique, en forme de couronne cylindrique; cette fourrure L comporte un certain nombre d'évidements C, sous la forme d'encoches s'étendant dans la fourrure radialement de part en part, régulièrement espacés angulairement, par exemple au nombre de six; à l'intérieur de ces évidements, sont insérées des palettes coulissantes J au moins partiellement en matériau magnétisable, mobiles entre une position «rétractée» où elles sont entièrement contenues dans les évidements C, à proximité immédiate du noyau D, et une position «sortie» où elles sont presque entièrement hors des évidements C, la partie restant dans l'évidement servant au guidage.

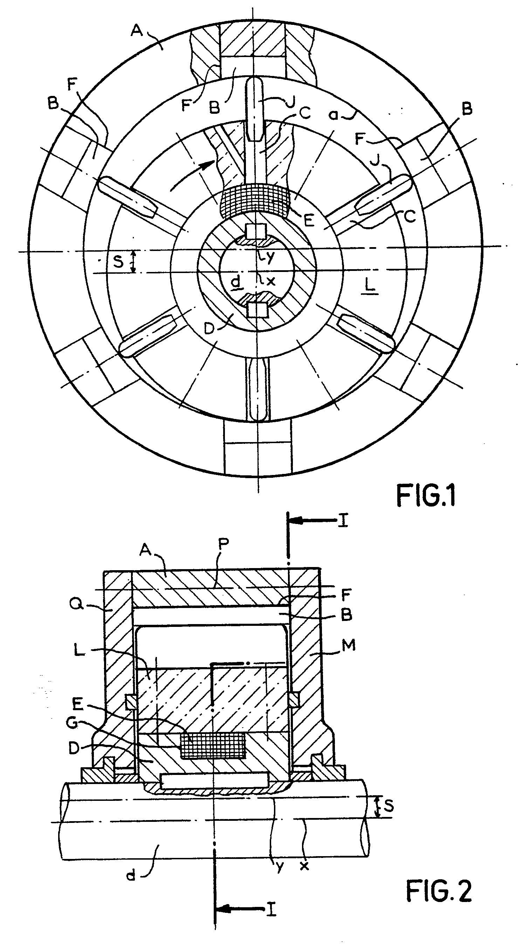

Une pièce annulaire A constitue un stator autour de l'ensemble constitué par l'arbre (d), le noyau intérieur (D) et la fourrure (L) formant rotor. La pièce annulaire A, en matériau bon conducteur de la chaleur, comporte un alésage a cylindrique; son axe y est excentré d'une valeur S par rapport à l'axe x de l'arbre d. Le stator annulaire A est positionné par rapport à l'arbre d par deux flasques latéraux M et Q en matériau amagnétique bon conducteur de la chaleur fixés de façon étanche au stator par exemple par des tirants non représentés sur les dessins mais dont l'emplacement est marqué par des axes portant le repère P sur les figures 2, 4 et 6; ces flasques M et Q sont montés de façon étanche sur l'arbre d, des moyens appropriés étant prévus pour permettre, dans de bonnes conditions, la rotation de cet arbre malgré l'immobilité du stator A.

Une certaine quantité d'un fluide dont la viscosité varie peu avec la température rempli l'espace laissé libre entre l'alésage a du stator annulaire A et la fourrure au moins partiellement amagnétique L.

Les dimensions des ajustements des différentes pièces permettent la libre rotation de l'ensemble constitué par l'arbre d, le noyau D et la fourrure L, formant rotor, à l'intérieur des flasques M, Q solidarisés à la pièce annulaire A formant stator, mais ne laissent que des sections de passage réduites le long des faces planes, afin que les fuites soient minimales.

Il résulte de cette structure que si l'arbre d est entraîné en rotation par le mouvement d'une masse à freiner qui lui est solidarisée, les palettes J étant maintenues en position rétractée, aucun couple de freinage ne lui est appliqué. Par contre, si les palettes J sont soumises à une force tendant à les faires sortir de leur évidement C, elles effectuent, au cours d'une rotation du rotor, un mouvement de va-et-vient complet, passant d'une position «rétracté» où elles sont entièrement contenues dans leur évidement à une position «sortie» où elles sont presque entièrement hors de leur évidement, et revenant à leur position «rétractée», la position de chaque palette J dans son évidement C étant définie par la distance de la paroi de l'alésage a à la paroi périphérique de la fourrure L (la course maximale des palettes étant par conséquent égale au double de l'excentrement S, à l'entrefer minimal existant entre la pièce annulaire A et la fourrure L près); aussi, les palettes en position «sortie» déterminent des chambres périphériques de volumes différents, et le passage forcé du fluide, provoquant un laminage intense entre les palettes et le stator, est à l'origine d'un couple de freinage. A des fins de simplification, on peut dire que la position des palettes à proximité immédiate du noyau correspond à une totale liberté du rotor par rapport au stator et que leur position à proximité immédiate du stator correspond à la position de freinage, bien qu'il existe une position où les palettes sont à la fois à proximité immédiate du noyau et du stator (à l'entrefer près), que l'on soit en freinage ou non.

Selon l'invention, la commande de la position des palettes est effectuée électromagnétique-ment, à l'aide d'un (ou plusieurs) enroulement(s) d'excitation respectivement solidaire(s) du rotor ou(/et) du stator, chaque enroulement pouvant être lui-même constitué de plusieurs parties branchées en série ou en parallèle, par exemple pour des raisons de sécurité.

La première forme de réalisation, représentée sur les figures 1 et 2, montre un enroulement d'excitation E, ici approximativement sous forme de tore, logé dans une cavité périphérique circulaire G creusée dans le noyau D au moins partiellement en matériau magnétique, de telle sorte que la périphérie du tore vienne affleurer la surface latérale du noyau D; le stator A, en matériau amagnétique (au moins partiellements), a son alésage a cylindrique garni d'aimants permanents B logés dans des cavités F réalisées dans ledit alésage a, ici sur toute la longueur de celui-ci, les aimants B, par exemple en nombre égal aux palettes J, venant affleurer la paroi de l'alésage a de telle sorte que les palettes J n'aient à franchir aucune discontinuité lors de leur rotation; on peut également prévoir, à la place de l'affleurement, que les cavités soient obturées du du côté des palettes par la présence d'une faible épaisseur de matière; préférentiellement, les aimants permanents B et leurs cavités F sont par ailleurs positionnés par rapport au même centre que le noyau D et les palettes J, c'est-à-dire l'axe longitudinal du rotor.

L'enroulement d'excitation, étant solidaire d'une pièce en rotation, doit être alimenté électriquement par l'intermédiaire d'un dispositif tel qu'un collecteur tournant ou analogue (non représenté).

Lorsque l'arbre d est en rotation, l'enroulement E étant alimenté par un courant d'excitation i (tension continue), les palettes J restent au fond de leur logement C dans la fourrure L, si la force électromagnétique engendrée par l'enroulement E (fonction de i) est supérieure à la somme de la force centrifuge et de la force d'origine magnétique créée par les aimants permanents B. La rotation s'effectue alors sans difficultés.

A l'instant désiré, pour le freinage, l'arrêt de l'alimentation de l'enroulement E (i=0) annule la force exercée sur les palettes J et détruit l'équilibre des forces qui en résultait; la force centrifuge et l'action des aimants permanents B deviennent alors prépondérantes, les palettes J sortent de leurs logements pour venir en contact avec le stator A, et il y a création d'une force de freinage par laminage de fluide sous les palettes.

Si l'arrêt total n'est pas désiré, il est possible de contrôler l'effort de freinage en diminuant seulement la valeur du courant i, ce qui permet de conserver une force électromagnétique de rappel, provoquant un laminage moins intense du fluide et par conséquent un effort de freinage moins important. Il est également possible de conserver pour une charge donnée un effort de freinage constant, permettant la diminution de la vitesse à partir d'une valeur initiale $v_1$ et sa stabilisation à une valeur $v_2$.

On a vu que, pour faire tourner l'arbre d, il est nécessaire que les palettes J soient au fond de leurs logements, donc que l'enroulement E soit alimenté d'une manière suffisante; pour maintenir l'arbre d à l'arrêt, à charge donnée, il suffit de ne pas alimenter l'enroulement E, les palettes étant alors attirées par les aimants permanents jusqu'au contact avec le stator A; on obtient alors un fonctionnement en organe de sécurité.

Cette forme de réalisation permet d'obtenir automatiquement un freinage en cas de panne d'alimentation électrique (par coupure des fils d'alimentation de la bobine par exemple, ou pour toute autre raison).

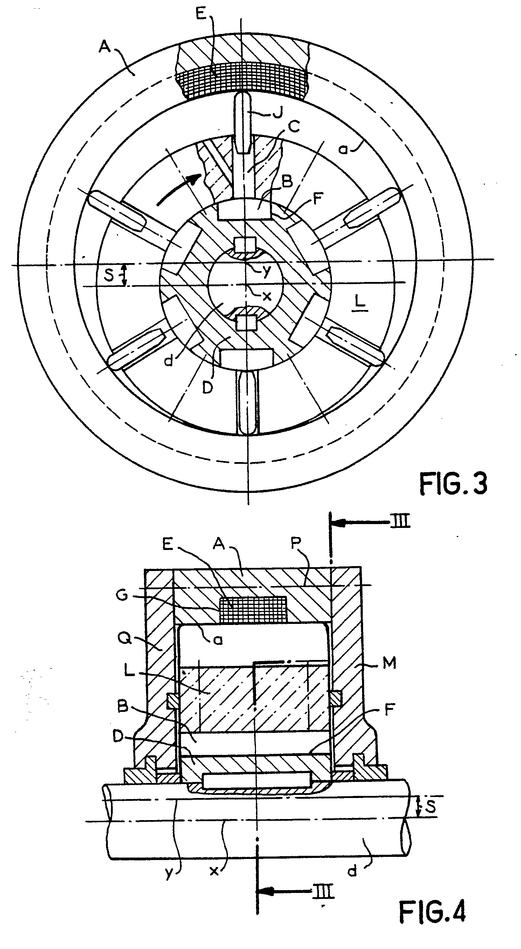

La deuxième forme de réalisation, représentée sur les figures 3 et 4, montre un enroulement d'excitation E, ici également approximativement sous forme de tore, logé dans une cavité périphérique circulaire G creusée dans l'alésage a de la pièce annulaire A constituant le stator, de telle sorte que la périphérie du tore (éventuellement protégée des frottements par tout moyen approprié) vienne affleurer la paroi de cet alésage; le stator A est cette fois au moins partiellement en matériau magnétique, afin de boucler le champ magnétique crée par l'enroulement E au travers des palettes J; des aimants permanents B sont, cette fois, logés dans des cavités F réalisées sous forme de rainures longitudinales prévues dans le noyau D ici sur toute la longueur de celui-ci; le noyau D peut être ici partiellement magnétique ou amagnétique.

Cette fois, pour que l'arbre d puisse tourner, il faut que l'enroulement E soit pas ou peu alimenté; néanmoins, ils est nécessaire que l'effort des aimants permanents B sur chaque palette J soit suffisant pour équilibrer la force centrifuge et maintenir les palettes au fond de leur logement. A l'instant où le freinage est désirée, l'alimentation de l'enroulement E rompt cet équilibre et crée un fort laminage de fluide sous la palette, provoquant l'arrêt de la rotation de l'arbre d. Dans le cas du freinage contrôlé à vitesse donnée, le contrôle est obtenu par l'alimentation de l'enroulement E par un courant plus ou moins intense, le nouvel équilibre des forces sur les palettes J engendrant un laminage lui-même plus ou moins intense entre les palettes et le stator, provoquant une diminution de la vitesse de rotation de l'arbre d. Le maintien du courant d'excitation dans l'enroulement E à son intensité maximale permet, par contact des palettes et du stator, le maintien de l'arbre d à vitesse nulle, l'effort de freinage maximal étant atteint par l'impossibilité de fuite entre chambres.

Cette deuxième forme de réalisation a pour avantage de ne pas nécessiter la présence d'un collecteur tournant.

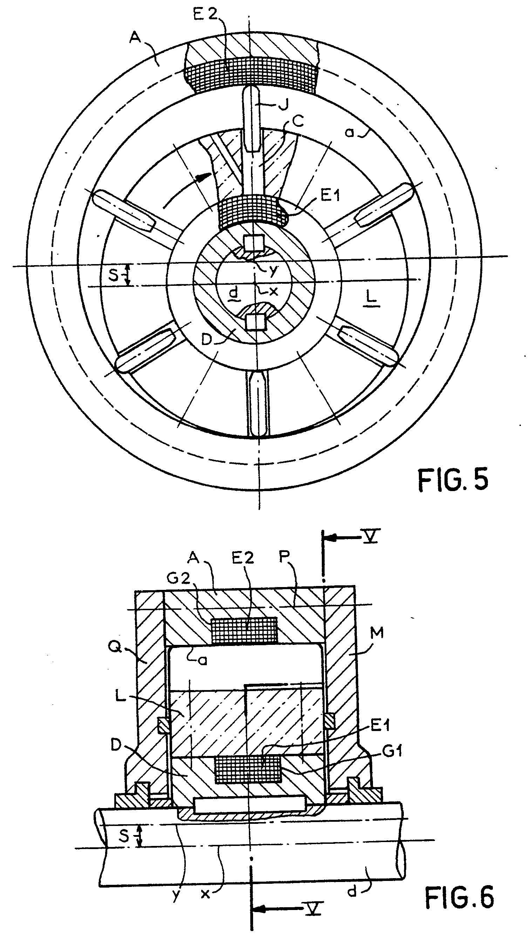

La troisième forme de réalisation, représentée sur les figures 5 et 6, résulte à la fois de la première et de la deuxième. Ici, le noyau D, au moins partiellement en matériau magnétique, comporte une cavité périphérique G1 munie d'un enroulement d'excitation E1 dans la même disposition que dans la première forme de réalisation, ce qui nécessite par conséquent également la présence d'un collecteur tournant ou analogue; mais la pièce annulaire A est également au moins partiellement en matériau magnétique et comporte une cavité périphérique circulaire G2 munie d'un enroulement d'excitation E2 dans la même disposition que dans la deuxième forme de réalisation.

Pour que l'arbre d puisse tourner, il faut que l'enroulement E1 soit alimenté suffisamment pour équilibrer la force centrifuge due à la masse des palettes J. Pour obtenir le freinage, il est nécessaire de détruire l'équilibre précédent en alimentant l'enroulement E2 (ou en diminuant le courant dans l'enroulement E1), ce qui permet de créer un effort de freinage, éventuellement maximal par laminage important du fluide. L'alimentation simultanée des enroulements E1 et E2 permet le dosage ou la modulation de l'effort créé sur les palettes J, donc de provoquer un laminage plus ou moins important du fluide sous la palette; ce dosage ou cette modulation peut permettre le maintien de l'arbre d, pour une charge donnée, à une vitesse déterminée. L'alimentation de l'enroulement E2 seul permet le contact des palettes J contre le stator A, engendrant le maintien à l'arrêt de l'arbre d.

Bien entendu, l'invention n'est pas limitée aux formes de réalisation ci-dessus décrites et représentées, à partir desquelles on pourra prévoir d'autres formes de réalisation sans pour cela sortir du cadre de l'invention défini dans les revendications annexées; on pourra par exemple remplacer les aimants permanents logés dans des cavités de la pièce annulaire ou du noyau par un aimant permanent formant lui-même un anneau en une seule pièce ou fractionné.

## Revendications

1. Frein rotatif électrohydraulique comprenant un noyau intérieur (D), au moins un enroulement d'excitation (E), une fourrure amagnétique cylindrique (L), une pièce annulaire (A) extérieure au noyau (D) et à la fourrure (L) et comportant un alésage cylindrique excentré par rapport à la surface périphérique cylindrique de la fourrure, des évidements (C) munis de palettes coulissantes (J) magnétisables et un fluide de freinage, frein rotatif électrohydraulique caractérisé en ce que le noyau intérieur (D) est solidarisé à un arbre tournant (d) et à la fourrure (L) disposés tous les trois coaxialement afin de constituer un rotor pour le frein, la pièce annulaire (A) extérieure au noyau et à la fourrure constituant un stator annulaire à alésage excentré par rapport à la surface périphérique de la fourrure constituant la pièce extérieure du rotor, et ayant des flasques latéraux (Q, M) montés de façon étanche sur l'arbre (d) de part et d'autre dudit rotor et en ce que les évidements (c) munis de palettes (J) sont réalisés dans la fourrure amagnétique cylindrique (L) et s'y étendent radialement de part en part afin que les palettes coulissantes (J) soient mobiles entre une position de totale liberté du rotor par rapport au stator annulaire dans laquelle elles sont positionnées à proximité du noyau rotorique et une position de freinage dans laquelle elles sont positionnées à proximité du stator annulaire, de telle sorte que, sous l'action d'une variation dans un sens prédéterminé du courant parcourant l'enroulement d'excitation, les palettes puissent être attirées vers le stator et déterminer ainsi des chambres périphériques de volumes différents.

2. Frein rotatif selon la revendication 1, caractérisé en ce qu'au moins l'une de ces deux pièces: stator annulaire (A) et rotor (d, D, L) comporte, pour chaque palette (J) considérée, un aimant permanent (B) s'opposant à la force d'attraction d'un enroulement d'excitation (E).

3. Frein rotatif selon la revendication 2, caractérisé en ce que l'aimant permanent (B) est disposé dans le stator annulaire (A) et s'oppose à la force d'attraction de l'enroulement d'excitation (E) disposé dans le rotor (d, D, L).

4. Frein rotatif selon la revendication 3, caractérisé en ce que l'enroulement d'excitation (E) est relié à une alimentation électrique par un moyen de liaison électrique tel qu'un collecteur tournant, de telle sorte qu'il puisse être alimenté électriquement afin de permettre la rotation du rotor et qu'une diminution du courant qui parcourt ledit enroulement entraîne, à partir d'une certaine valeur, le déplacement de chaque palette (J) vers l'aimant permanent (B) afin de provoquer le freinage (figures 1 et 2).

5. Frein rotatif selon la revendication 2, caractérisé en ce que l'aimant permanent (B) est disposé dans le rotor (d, D, L) et s'oppose à la force d'attraction de l'enroulement d'excitation (E) disposé dans le stator annulaire (A).

6. Frein rotatif selon la revendication 5, caractérisé en ce que l'enroulement d'excitation (E) est relié à une alimentation électrique de telle sorte qu'il puisse être alimenté électriquement afin de permettre le freinage, la force de l'aimant permanent (B) étant, en l'absence de courant dans ledit enroulement, suffisante pour vaincre la force centrifuge s'exerçant sur les palettes (J) (figures 3 et 4).

7. Frein rotatif selon la revendication 1, caractérisé en ce que le stator annulaire (A) et le rotor (d, D, L) comportent chacun un enroulement d'excitation ($E_1$, $E_2$), les deux enroulements étant en opposition.

8. Frein rotatif selon la revendication 7, caractérisé en ce que l'enroulement d'excitation (E1) logé dans le rotor est relié à une alimentation électrique par un moyen de liaison électrique tel qu'un collecteur tournant, et en ce que l'enroulement d'excitation (E2) logé dans le stator annulaire extérieur (A) est également relié à une alimentation électrique (figures 5 et 6).

9. Frein rotatif selon les revendications 2, 3 ou 5, caractérisé en ce que chaque pièce contenant un aimant permanent (B) est, au moins partiellement, réalisé en un matériau amagnétique.

10. Frein rotatif selon les revendications 2, 3, 5 ou 7, caractérisé en ce que chaque pièce contenant un enroulement d'excitation (E) est, au moins partiellement, réalisé en un matériau magnétique.

11. Frein rotatif selon les revendications 2, 3, 5, 7, 9 ou 10, caractérisé en ce que les aimants permanents (B) et les enroulements d'excitation (E) sont reçus dans des logements (F ou G) pratiqués dans la pièce qui les reçoit.

12. Frein rotatif selon la revendication 11, caractérisé en ce que l'aimant permanent (B) affleure la surface de la pièce qui le reçoit.

13. Frein rotatif selon la revendication 11, caractérisé en ce que l'aimant permanent (B) est en retrait par rapport à la surface de la pièce qui le reçoit, un rattrapage de matière réalisant alors l'affleurement.

14. Frein rotatif selon la revendication 11, caractérisé en ce que l'aimant permanent (B) a une forme annulaire.

15. Frein rotatif selon la revendication 11, caractérisé en ce qu'il comporte des aimants permanents (B) répartis circonférentiellement.

**Patentansprüche**

1. Elektrohydraulische Rotationsbremse mit einem Innenkern (D), zumindest einer Erregerwicklung (E), einem nicht magnetischen zylindrischen Mantel (L), einem ausserhalb des Kerns (D) und des Mantels (L) vorgesehenen und eine gegenüber der zylindrischen Umfangsfläche des Mantels exzentrische zylindrische Bohrung aufweisenden ringförmigen Teil (A), mit Aussparungen (C), die mit verschiebbaren, magnetisierbaren Platten (J) versehen sind, sowie mit einem Bremsfluid, dadurch gekennzeichnet, dass der Innenkern (D) mit einer Drehwelle (d) und dem Mantel (L) fest verbunden ist und dass diese drei Bauteile zur Bildung eines Rotors für die Bremse zueinander koaxial angeordnet sind, dass das ausserhalb des Kerns und dem Mantel vorgesehene ringförmige Teil (A) einen ringförmigen Stator mit einer bezüglich der Umfangsfläche des den äusseren Teil des Rotors bildenden Mantels exzentrischen Bohrung bildet und Seitenwände (Q, M) aufweist, die beidseitig des Rotors dichtend auf der Welle (d) angebracht sind und dass die mit Platten (J) versehenen Aussparungen (c) im nichtmagnetischen zylindrischen Mantel (L) ausgebildet sind und sich radial durch diesen hindurch erstrecken, so dass die verschiebbaren Platten (J) zwischen einer Stellung, in der der Rotor in Bezug auf den ringförmigen Stator vollkommen frei ist und in der die Platten in der Nähe des Rotorkerns positioniert sind, sowie einer Bremsstellung bewegbar sind, in der sie in der Nähe des ringförmigen Stators positioniert sind, wobei die Platten aufgrund einer Variation des durch die Erregerwicklung fliessenden Stormes in vorgegebenem Sinn zum Stator hin angezogen werden können und somit durch die Platten Umfangskammern mit unterschiedlichen Volumen festlegbar sind.

2. Rotationsbremse nach Anspruch 1, dadurch gekennzeichnet, dass zumindest eines der beiden Teile: ringförmiger Stator (A) und Rotor (d, D, L), für jede vorgesehene Platte (J) einen der Anziehungskraft einer Erregerwicklung (E) entgegenwirkenden Permanentmagneten (B) umfasst.

3. Rotationsbremse nach Anspruch 2, dadurch gekennzeichnet, dass der Permanentmagnet (B) im ringförmigen Stator (A) angeordnet ist und der Anziehungskraft der im Rotor (d, D, L) angeordneten Erregerwicklung (E) entgegenwirkt.

4. Rotationsbremse nach Anspruch 3, dadurch gekennzeichnet, dass die Erregerwicklung (E) über eine elektrische Verbindungseinrichtung wie ein Drehkollektor mit einer elektrischen Stromversorgung derart verbunden ist, dass sie elektrisch erregbar ist, um die Rotation des Rotors zuzulassen, und dass eine Verminderung des durch die Antriebswicklung fliessenden Stromes ab einem bestimmten Wert eine Verlagerung jeder Platte (J) zum Permanentmagneten (B) hin bewirkt, um die Bremsung auszulösen ( Fig. 1 und 2).

5. Rotationsbremse nach Anspruch 2, dadurch gekennzeichnet, dass der Permanentmagnet (B) im Rotor (d, D, L) angeordnet ist und der Anziehungskraft der im ringförmigen Stator (A) angeordneten Erregerwicklung (E) entgegenwirkt.

6. Rotationsbremse nach Anspruch 5, dadurch gekennzeichnet, dass die Erregerwicklung (E) derart mit einer elektrischen Stormversorgung verbunden ist, dass sie elektrisch erregbar ist, um die Bremsung zu ermöglichen, und dass die Kraft des Permanentmagneten (B) bei stromloser Wicklung zur Überwindung der auf die Platten (J) einwirkenden Zentrifugalkraft ausreicht (Fig. 3 und 4).

7. Rotationsbremse nach Anspruch 1, dadurch gekennzeichnet, dass der ringförmige Stator (A) und der Rotor (d, D, L) jeweils eine Erregerwicklung (E₁, E₂) umfassen und dass die beiden Wicklungen einander entgegengesetzt sind.

8. Rotationsbremse nach Anspruch 7, dadurch gekennzeichnet, dass die in dem Rotor untergebrachte Erregerwicklung (E1) über eine elektrische Verbindungseinrichtung wie einen Drehkollektor mit einer elektrischen Stromversorgung verbunden ist und dass die in dem äusseren ringförmigen Stator (A) untergebrachte Erregerwicklung (E2) gleichermassen mit einer elektrischen Stromversorgung verbunden ist (Fig. 5 und 6).

9. Rotationsbremse nach Anspruch 2, 3 oder 5, dadurch gekennzeichnet, dass jedes einen Permanentmagneten (B) enthaltende Teil zumindest teilweise aus einem nichtmagnetischen Material gebildet ist.

10. Rotationsbremse nach Anspruch 2, 3, 5 oder 7, dadurch gekennzeichnet, dass jedes eine Erregerwicklung (E) enthaltende Teil zumindest teilweise aus magnetisierbarem Material gebildet ist.

11. Rotationsbremse nach einem der Ansprüche 2, 3, 5, 7, 9 oder 10, dadurch gekennzeichnet, dass die Permanentmagnete (B) und die Erregerwicklungen (E) in Sitzen (F oder G) aufgenommen sind, die jeweils in dem zugehörigen Teil vorgesehen sind.

12. Rotationsbremse nach Anspruch 11, dadurch gekennzeichnet, dass der Permanentmagnet (B) mit der Oberfläche des Teils, das ihn aufnimmt, bündig abschliesst.

13. Rotationsbremse nach Anspruch 11, dadurch gekennzeichnet, dass der Permanentmagnet in bezug auf die Oberfläche des Teils, das ihn aufnimmt, zurückgesetzt ist und dass zur Herstellung des bündigen Abschlusses ein Ausgleichsstück vorgesehen ist.

14. Rotationsbremse nach Anspruch 11, dadurch gekennzeichnet, dass der Permanentmagnet (B) ringförmig ausgebildet ist.

15. Rotationsbremse nach Anspruch 11, dadurch gekennzeichnet, dass über den Umfang verteilte Permanentmagnete (B) vorgesehen sind.

**Claims**

1. An electro-hydraulic rotary brake comprising an inner core D, at least one excitation winding E, a cylindric amagnetic sleeve L, an annular piece A external to the core D and to the sleeve L, and comprising a cylindric bore therein offfcentered relative to the cylindric peripheral surface of the sleeve, recesses C provided with magnetizable sliding vanes J, and a braling fluid, such electrohydraulic rotary brake being characterized in that the inner core D is secured to a rotary shaft d and to the sleeve L, all three of them being disposed coaxially so as to constitute a rotor for the brake, the annular piece A external to the core and to the sleeve constituting an annular stator having an offcentered bore therein relative to the peripheral surface of the sleeve constituting the piece external to the rotor, and having lateral disks Q, M, sealingly mounted on the shaft d on both sides of said rotor, and in that the recesses c provided with vanes J are realized in the cylindric amagnetic sleeve L and extend therethrough radially such that the sliding vanes J are movable between a position of total freedom of the rotor relative to the annular stator, in which they are disposed close to the rotor core, and a braking position in which they are disposed close to the annular stator, in such a maner that under the action of a variation in a predetermined direction of the current flowing in the excitation winding, the vanes can be attracted toward the stator to thereby determine peripheral chambers having different volumes.

2. A rotary brake as in claim 1, characterized in that at least one of the two pieces, the annular stator A and the rotor d, D, L comprises, for each vane J considered, a permanent magnet B opposing the attraction force of an excitation winding E.

3. A rotary brake as in claim 2, characterized in that the permanent magnet B is disposed in the annular stator A and opposes the attraction force of the excitation winding E disposed in the rotor d, D, L.

4. A rotary brake as in claim 3, characterized in that the excitation winding E is connected to an electric power supply by electric connection means such as a rotary collector such that it may be supplied with electric power to permit rotation of the rotor, and that decrease in the current flowing in said winding causes, from a certain value thereof, displacement of each vane J toward the permanent magnet B to provoke the braking (fiures 1 and 2).

5. A rotary brake as in claim 2, characterized in that the permanent magnet B is diposed in the rotor d, D, L, and opposes the attraction force of the excitation winding E disposed in the annular stator A.

6. A rotary brake as in claim 5, characterized in that the excitation winding E is connected to an electric power supply such that it can be supplied with electric power to permit the braking, the force of the permanent magnet B being sufficient in the absence of current in said winding to overcome the centrifugal force exerted on the vanes J (figures 3 and 4).

7. A rotary brake as in claim 1, characterized in that the annular stator A and the rotor d, D, L, each comprise an excitation winding E1, E2, both windings being in opposition.

8. A rotary brake as in claim 7, characterized in that the excitation winding E1 housed in the rotor is connected to an electric power supply by an electric connecting means such as a rotary collector, and in that the excitation winding E2 housed in the outer annular stator A is also connected to an electric power supply (figures 5 and 6).

9. A rotary brake as in claims 2, 3 or 5, characterized in that each piece containing a permanent magnet B is at least partly realized from an amagnetic material.

10. A rotary brake as in claims 2, 3, 5 or 7, characterized in that each piece containing an excitation winding E is at least partly realized from a magnetic material.

11. A rotary brake as in claims 2, 3, 5, 7, 9 or 10, characterized in that the permanent magnets B and the excitation windings E are received in lodgings F or G formed in the piece receiving them.

12. A rotary brake as in claim 11, characterized in that the permanent magnet B is level with the surface of the piece receiving it.

13. A rotary brake as in claim 11, characterized in that the permanent magnet B is retracted relative to the surface of the piece receiving it, a filling up of material realizing the levelling.

14. A rotary brake as in claim 11, characterized in that the permanent magnet B is of an annular shape.

15. A rotary brake as in claim 11, characterized in that it comprises circumferentially distributed permanent magnets B.

0 018 292

1/3

FIG.1

FIG.2

FIG. 3

FIG. 4

3/3

FIG. 5

FIG.6